Europäisches Patentamt

European Patent Office

Office européen des brevets

(11) Numéro de publication : **0 452 200 A1**

# (12) DEMANDE DE BREVET EUROPEEN

(21) Numéro de dépôt : 91400929.5

(22) Date de dépôt : 05.04.91

(51) Int. Cl.⁵ : **C08F 220/18, C09D 133/04**

(30) Priorité : 09.04.90 FR 9004506

(43) Date de publication de la demande :
16.10.91 Bulletin 91/42

(84) Etats contractants désignés :
AT BE CH DE DK ES FR GB GR IT LI LU NL SE

(71) Demandeur : CRAY VALLEY SA
Tour Total, 24 cours Michelet
F-92800 Puteaux (FR)

(72) Inventeur : Tripette, Claude
52, rue du Professeur Calmette
F-60550 Verneuil-en-Halatte (FR)

(74) Mandataire : Chaillot, Geneviève
Cabinet CHAILLOT 21, avenue Louise de
Bettignies
F-92700 Colombes (FR)

(54) "(Co)polymères acryliques en solution et leur application à la formulation de compositions de revêtement.

(57)     Ces (co)polymères en solution dans un hydrocarbure aliphatique saturé au moins en $C_6$ comprennent, pour 100 pp de (méth)acrylate d'alkyle : 10-100 pp environ d'au moins un (méth)acrylate d'alkyle primaire supérieur au moins en $C_8$, et 0-90 pp environ d'au moins un comonomère choisi parmi les (méth)acrylates d'alkyle primaire inférieur en $C_1$-$C_6$ et les (méth)acrylates de dialkylamino-alkyle dont les groupements alkyle sont en $C_1$-$C_6$ environ. Les compositions de revêtement peuvent être utilisées, selon leur Tg, comme liants-dispersants pour pâtes pigmentaires dans l'industrie des peintures et des encres en solvants ; polymères ayant un pouvoir collant pour adhésifs sensibles à la pression dans des articles adhésifs ménagers, mousses de polyester auto-adhésives, rupans adhésifs ; polymères à pouvoir collant pour formulation de colles en solvants pour revêtements de sols textiles ou en PVC plastifié, polymères à pouvoir collant pour adhésifs de contact du type encollage double face pour le bâtiment.

EP 0 452 200 A1

Jouve, 18, rue Saint-Denis, 75001 PARIS

La présente invention se rapporte à de nouveaux (co)polymères acryliques en solution dans des hydrocarbures aliphatiques lourds et à leur application à la fomulation de compositions de revêtement telles que peintures et adhésifs.

La plupart des polymères et copolymères à base de monomères acryliques et méthacryliques possèdent une faible solubilité dans les solvants hydrocarbonés aliphatiques, en particulier des hydrocarbures aliphatiques ayant de 6 à 14 atomes de carbone, ce qui a pour conséquence de limiter leur possibilité d'emploi dans des formulations en solvant exigeant simultanément de faibles viscosités à température ambiante et des extraits secs élevés, par exemple dans les industries des peintures et des adhésifs. Ces industries sont donc depuis longtemps à la recherche de polymères et copolymères acryliques possédant une forte solubilité dans les hydrocarbures aliphatiques lourds et dont les solutions dans ces hydrocarbures présentent des viscosités- à température ambiante - faibles ou modérées même lorsque leurs taux de matières sèches (dits "extraits secs") sont élevés, ceci constituant le problème visé par la présente invention.

La présente invention est basée sur la découverte surprenante que ce problème peut être résolu en choisissant d'une part comme monomère obligatoire un acrylate ou méthacrylate d'alkyle primaire dont le groupe alkyle primaire, de préférence ramifié, possède au moins 8 atomes de carbone, et en choisissant d'autre part comme comonomère facultatif un acrylate ou méthacrylate de dialkylaminoalkyle dont les groupements alkyle possèdent, de préférence, de 1 à 6 atomes de carbone et/ou un acrylate ou méthacrylate d'alkyle primaire dont le groupe alkyle primaire possède de 1 à 6 atomes de carbone.

Le brevet allemand n° 1 594 005 décrit un adhésif acrylique et un produit de revêtement acrylique insensibles à l'eau composés de copolymères comprenant de 20 à 80% en poids d'un acrylate d'alkyle primaire et de 80 à 20% en poids d'un acrylate d'alkyle secondaire ou tertiaire, ces copolymères pouvant être formés par polymérisation en solution dans des hydrocarbures aliphatiques ayant notamment de 4 à 7 atomes de carbone. Il y est toutefois précisé qu'on leur préfère les solvants hautement volatils et possédant une certaine action de modification sur le polymère en formation, parmi lesquels le toluène, le xylène, le bromotrichlorométhane, la méthyléthylcétone et la méthylisobutylcétone.

Le brevet britannique n° 971 673 décrit un copolymère, obtenu par polymérisation dans l'eau, de méthacrylate de méthyle et d'un ester d'acide (méth)acrylique et d'un alcool primaire ayant de 4 à 12 atomes de carbone, ledit ester formant de 3 à 20% en moles du copolymère.

Enfin, le brevet britannique n° 779 687 indique qu'un copolymère de 40% en poids de méthacrylate de n-butyle et 60% en poids de méthacrylate d'éthyle en solution à 10% dans le dioxanne ne montre aucune propriété adhésive.

Un premier objet de la présente invention consiste en des (co)polymères à base de (méth)acrylate d'alkyle en solution dans un hydrocarbure aliphatique saturé, caractérisés en ce que pour 100 parties en poids de (méth)acrylate d'alkyle, ils comprennent :

– de 10 à 100 parties en poids environ d'au moins un acrylate ou méthacrylate d'alkyle primaire supérieur dont le groupe alkyle primaire supérieur possède au moins 8 atomes de carbone, et

– de 0 à 90 parties en poids environ d'au moins un comonomère choisi parmi les acrylates et méthacrylates d'alkyle primaire inférieur dont le groupe alkyle primaire inférieur possède de 1 à 6 atomes de carbone et les acrylates et méthacrylates de dialkylaminoalkyle dont les groupements alkyle possèdent de 1 à 6 atomes de carbone environ, et

en ce que ledit hydrocarbure aliphatique saturé possède au moins 6 atomes de carbone.

L'acrylate ou méthacrylate d'alkyle supérieur faisant obligatoirement partie du (co)polymère selon l'invention possède un groupe alkyle comprenant par exemple de 8 à 20 atomes de carbone. Ce groupe alkyle supérieur est de préférence ramifié. A titre d'exemples, on peut citer notamment les groupes 2-éthylhexyle et 3,5,5-tri-méthylhexyle.

Comme exemples de comonomères éventuellement présents dans les (co)polymères en solution selon l'invention, on peut citer notamment les acrylates et méthacrylates de méthyle, éthyle, n-propyle, n-butyle et diméthylaminoéthyle.

En fonction de la solubilité dans l'hydrocarbure recherchée, et en fonction de la viscosité - à température ambiante - de la solution recherchée, la teneur pondérale en comonomère sera adaptée en fonction de la nature dudit comonomère. Cette adaptation est à la portée de l'homme de l'art en suivant les indications ci-après : à extrait sec donné, la proportion maximale de comonomère admissible pour atteindre une viscosité donnée dans un solvant donné sera d'autant plus élevée que :

– le groupe alkyle inférieur est plus important, c'est-à-dire comprend davantage d'atomes de carbone.

– à taille égale du groupe alkyle inférieur, on remplace un méthacrylate par un acrylate.

Ainsi, toujours en fonction de l'objectif visé par la présente invention, il pourra être nécessaire de restreindre à une valeur sensiblement inférieure à 90 parties en poids la proportion de comonomère dans le copolymère lorsque ledit comonomère est un méthacrylate d'alkyle inférieur tel que le méthacrylate de méthyle ou bien le méthacrylate de diméthylaminoéthyle : dans le premier cas cette proportion sera limitée à 45 parties en poids environ pour un extrait sec de 40% à 50% environ, dans le second cas elle sera limitée à 75 parties environ.

Comme hydrocarbure dans lequel les (co)polymères selon l'invention sont mis en solution, on peut citer notamment les hydrocarbures aliphatiques saturés linéaires, ramifiés ou cycliques possèdant de 6 à 14 atomes de carbone tels que le cyclohexane, le n-heptane, le méthylcyclohexane, le n-octane, le n-décane, le n-dodécane, le cycloheptane, le cyclooctane, l'éthylcyclohexane, l'éthylcyclopentane et leurs mélanges en toutes proportions.

Les solutions de (co)polymères selon l'invention peuvent présenter un taux de matières sèches, ou extrait sec, atteignant jusqu'à 70% en poids environ tout en possédant une viscosité à température ambiante (20°C environ) relativement faible, comprise par exemple entre 80 et 3 000 mPa.s environ, qui permet de les utiliser sans difficultés pour la formulation de revêtement: tels que peintures et adhésifs en solvant.

Les solutions de (co)polymères selon l'invention peuvent être préparées en (co)polymérisant, dans un hydrocarbure aliphatique saturé possédant au moins 6 atomes de carbone - et défini tel que précédemment - à une température comprise entre 70°C environ et la température d'ébullition dudit hydrocarbure - de préférence entre 70°C et 130°C environ - et en présence d'au moins un initiateur de radicaux libres, un système de monomère(s) à base de (méth)acrylate d'alkyle, comprenant, pour 100 parties en poids de (méth)acrylate d'alkyle :

– de 10 à 100 parties en poids environ d'au moins un acrylate ou méthacrylate d'alkyle primaire supérieur tel que défini précédemment, et

– de 0 à 90 parties en poids environ d'au moins un comonomère tel que défini précédemment.

L'initiateur de radicaux libres, qui peut être un peroxyde, un hydroperoxyde ou un composé azoïque utilisé à raison de 0,5 à 1,5% environ en poids par rapport au système de monomère(s), peut être introduit en une ou plusieurs fois dans le milieu de polymérisation. La température de polymérisation peut être maintenue croissante pendant toute la durée de la polymérisation ou bien varier, par exemple par paliers, généralement de manière constante au fur et à mesure de l'avancement de la polymérisation. La durée de la polymérisation, bien évidemment fonction de la température, est généralement comprise entre 4 et 10 heures environ. La proportion d'hydrocarbure saturé utilisé est fonction du taux de matières sèches, ou extrait sec, désiré et par conséquent fonction de l'application finale visée. Elle est généralement au moins égale à 30% en poids environ au milieu de polymérisation. A l'issue du processus de polymérisation des monomères en présence, on obtient une solution de (co)polymère dans l'hydrocarbure saturé qui peut être utilisée en l'état pour certaines applications, notamment la formulation de revêtements tels qu'adhésifs ou peintures en solvant.

Enfin un autre objet de la présente invention consiste en une composition de revêtement, telle qu'une composition de peinture ou bien une composition d'adhésif, comprenant au moins une solution d'un polymère ou copolymère acrylique en solution dans un hydrocarbure aliphatique saturé tel que décrit précédemment. Une telle composition de revêtement présente, tant du point de vue de l'odeur que du point du vue toxicologique ou de la mise en oeuvre, des avantages importants par rapport aux compositions de revêtements connues constituées de (co)polymères acryliques ou méthacryliques en solution dans des solvants hydrocarbonés aromatiques (benzène, toluène, xylènes, etc.) ou autres.

Les compositions de revêtement selon l'invention peuvent être utilisées, selon leur température de transition vitreuse, comme :

– liants-dispersants, notamment pour pâtes pigmentaires, ou également liants principaux dans des formulations de peintures et encres en solvants, utilisés seuls ou en combinaison avec des résines de type alkyde, caoutchouc chloré, époxy ou polyuréthanne ;

– polymères ayant un pouvoir collant pour adhésifs sensibles à la pression dans des applications telles que : articles adhésifs ménagers, mousses de polyester auto-adhésives, rubans adhésifs ; ils sont particulièrement adaptés aux adhésifs translucides en raison de leur résistance thermique et de leur résistance au rayonnement ultraviolet élevées ;

– polymères ayant un pouvoir collant pour formulation de colles en solvants pour revêtements de sols textiles ou en poly(chlorure de vinyle) plastifié ;

– polymères ayant un pouvoir collant pour adhésifs de contact du type à encollage double face pour le bâtiment, par exemple, collage de plinthes en élastomères ou poly(chlorure de vinyle).

Lorsqu'elles sont utilisées comme liants-dispersants dans l'industrie des peintures et encres en solvants, les compositions de revêtement selon l'invention peuvent en outre comprendre :

– au moins un épaississant choisi parmi des argiles modifiées organophiles telles que bentonite, montmorillonite, des huiles de ricin hydrogénés, etc. ;

– au moins un fongicide ou biocide, tel que notamment un dérivé chloro-alkylé, la dithio-2,2-bis (benzylméthyl-amide), un mélange de base chloracétamide et d'ester organostannique, un sel de trialkylétain ou un mélange de sels d'isothiazolone ;

— au moins un pigment organique ou minéral et

— au moins une charge telle qu'oxyde de titane, de zinc ou de fer, le carbonate de calcium, les sulfates alcalino-terreux, les silices, silicates et silico-aluminates, etc.

Lorsqu'elles sont utilisées comme adhésifs sensibles à la pression, les compositions de revêtement selon l'invention peuvent en outre comprendre une solution d'élastomère (du type caoutchouc naturel, copolymères styrène-butadiène, styrène-butadiène-styrène, styrène-isoprène-styrène, styrène-éthylène/isobutylène-styrène) en quantité telle que le rapport en masse élastomère/(co)polymère (méth)acrylique ne dépasse pas 2/1 et soit communément compris entre 1/2 et 2/1. Les solutions de (co)polymères (méth)acryliques selon l'invention peuvent être utilisées seules comme adhésifs sensibles à la pression lorsque leur viscosité à température ambiante est au moins égale à 2000 mPa.s.

Lorsqu'elles sont utilisées pour la formulation de colles en solvants, les compositions de revêtement selon l'invention comprennent généralement, outre le (co)polymère (méth)acrylique selon l'invention, une solution alcoolique de résines telles que la colophane, les résines de tall, les esters de colophane ou de tall avec un polyalcool tel que la pentaérythritol ou le diéthylèneglycol, ou encore des sous-produits de distillation de la colophane, tels qu'un brai demi-clair.

Le rapport en masse résine/(co)polymère (méth)-acrylique est généralement compris entre 3/1 et 5/1, la concentration de résine et (co)polymère dans la solution étant de 60 à 75% environ en masse. A cette solution, on ajoute souvent des charges (dans un rapport en poids

$$\frac{\text{charge}}{\text{résine + (co)polymère}}$$

allant jusqu'à 2/1 environ) telles que craie d'origine fossile, silices broyées, kaolin, ainsi que des plastifiants (de type phtalates par ex.) et des résines liquides d'hydrocarbures en $C_5$ ou $C_9$.

Lorsqu'elles sont utilisées pour la formulation d'adhésifs de contact, les compositions de revêtement selon l'invention comprennent généralement, outre le (co)polymère (méth)acrylique selon l'invention, une solution d'élastomère du type polychloroprène dans un rapport en masse élastomère/(co)polymère de l'ordre de 1/1 environ ainsi que des charges minérales (telles que craie ou silice broyée, ou carbonate de calcium de type dolomitique) dans un rapport en masse

$$\frac{\text{charge}}{\text{élastomère + (co)polymère}}$$

allant jusqu'à 1/1 environ. Elles peuvent comprendre en outre des résines tackifiantes de type polyterpène-phénolique.

Les exemples qui suivent sont fournis à titre purement illustratif et non limitatif de la présente invention.

## EXEMPLES 1 à 9

On (co)polymérise, en présence de 100 g de n-heptane, à la température de 80°C et pendant une durée de 10 heures, au moyen d'azobisisobutyronitrile comme initiateur de radicaux libres, un mélange de X grammes de méthacrylate de 3,3,5-triméthylhexyle et de Y grammes d'acrylate de n-butyle. La viscosité $\eta$ du (co)polymère en solution obtenu est mesurée à 20°C à l'aide d'un rhéomètre ou d'un viscosimètre Brookfield conformément à la norme T-3029, exprimée en mPa.s et indiquée au Tableau I ci-après en fonction de X et Y, ainsi que la température de transition vitreuse Tg exprimée en °C.

TABLEAU I

| Exemple | X | Y | $\eta$ | Tg |
|---------|-----|-----|-----|-----|
| 1 | 100 | 0 | 165 | +3 |
| 2 | 90 | 10 | 170 | −3 |
| 3 | 80 | 20 | 180 | −9 |
| 4 | 70 | 30 | 190 | −15 |
| 5 | 60 | 40 | 195 | −21 |
| 6 | 50 | 50 | 200 | −26 |
| 7 | 40 | 60 | 215 | −31 |
| 8 | 30 | 70 | 225 | −36 |
| 9 | 20 | 80 | 235 | −41 |

## EXEMPLES 10 à 14

On reproduit la procédure expérimentale des exemples précédents en remplaçant l'acrylate de n-butyle par le méthacrylate de n-butyle. La viscosité $\eta$ et la température de transition vitreuse Tg du copolymère en solution obtenu sont mesurées comme aux exemples précédents et indiquées au Tableau II ci-après.

TABLEAU II

| Exemple | 10 | 11 | 12 | 13 | 14 |
|---------|-----|-----|-----|-----|------|
| X | 80 | 60 | 50 | 40 | 30 |
| Y | 20 | 40 | 50 | 60 | 70 |
| $\eta$ | 210 | 265 | 340 | 415 | 1060 |
| Tg | +8 | +13 | +16 | +18 | +21 |

## EXEMPLES 15 à 18

On reproduit la procédure expérimentale des Exemples 1 à 9 en remplaçant l'acrylate de n-butyle par le méthacrylate de méthyle. La viscosité $\eta$ et la température de transition vitreuse Tg du copolymère en solution obtenu sont mesurées comme aux exemples précédents et indiquées au Tableau III ci-après.

### TABLEAU III

| Exemple | 15 | 16 | 17 | 18 |
|---------|-----|-----|------|------|
| X | 90 | 80 | 70 | 50 |
| Y | 10 | 20 | 30 | 50 |
| $\eta$ | 205 | 435 | 2450 | n.m. |
| Tg | +10 | +18 | +27 | +46 |

n.m. : non mesurable (polymère gélifié)

### EXEMPLE 19

On copolymérise, comme à l'Exemple 5 mais en présence de 150 g de n-heptane, un mélange de 60 g de méthacrylate de 3,5,5-triméthylhexyle et de 40 g de méthacrylate de méthyle. Le copolymère en solution obtenu possède une viscosité à 20°C, mesurée comme aux exemples précédents, égale à 2500 mPa.s.

### EXEMPLES 20 à 26

On reproduit la procédure expérimentale des Exemples 1 à 9 en remplaçant l'acrylate de n-butyle par le méthacrylate de diméthylaminoéthyle. La viscrsité $\eta$ et la température de transition vitreuse Tg du copolymère en solution obtenu sont mesurées comme aux exemples précédents et indiquées au Tableau IV ci-après.

### TABLEAU IV

| Exemple | X | Y | $\eta$ | Tg |
|---------|-----|-----|-----|------|
| 20 | 90 | 10 | 185 | +4 |
| 21 | 80 | 20 | 195 | +6 |
| 22 | 70 | 30 | 280 | +7 |
| 23 | 60 | 40 | 310 | +9 |
| 24 | 50 | 50 | 330 | +10 |
| 25 | 40 | 60 | 590 | +12 |
| 26 | 30 | 70 | 700 | +14 |

### EXEMPLE 27

On reproduit la procédure expérimentale de l'Exemple 1 en remplaçant, en tant que solvant de polymérisation, le n-heptane par l'acétate d'éthyle. L'homopolymère en solution obtenu possède une viscosité à 20°C, mesurée comme aux exemples précédents, égale à 170 mPa.s.

EXEMPLE 28

On reproduit la procédure expérimentale de l'Exemple 1 en remplaçant, en tant que solvant de polymérisation, le n-heptane par la méthyléthylcétone. L'homopolymère en solution obtenu possède une viscosité à 20°C, mesurée comme aux exemples précédents, égale à 100 mPa.s.

EXEMPLES 29 à 36

On reproduit la procédure expérimentale des Exemples 1 à 8 en remplaçant le méthacrylate de 3,3,5-triméthylhexyle par l'acrylate de 3,3,5-triméthylhexyle. La viscosité $\eta$ et la température de transition vitreuse Tg du (co)polymère en solution obtenu sont mesurées comme aux exemples précédents et indiquées au Tableau V ci-après.

### TABLEAU V

| Exemple | X | Y | $\eta$ | Tg |
|---------|-----|----|-----|-----|
| 29 | 100 | 0 | 95 | -58 |
| 30 | 90 | 10 | 125 | -57 |
| 31 | 80 | 20 | 135 | -56 |
| 32 | 70 | 30 | 150 | -55 |
| 33 | 60 | 40 | 160 | -54 |
| 34 | 50 | 50 | 170 | -54 |
| 35 | 40 | 60 | 180 | -53 |
| 36 | 30 | 70 | 190 | -52 |

EXEMPLES 37 à 45

On reproduit la procédure expérimentale des Exemples 2 à 9 en remplaçant le méthacrylate de 3,3,5-triméthylhexyle par l'acrylate correspondant et en remplaçant l'acrylate de n-butyle par le méthacrylate correspondant. La viscosité $\eta$ et la température de transition vitreuse Tg du copolymère en solution obtenu sont mesurées comme aux exemples précédents et indiquées au Tableau VI ci-après.

TABLEAU VI

| Exemple | X | Y | $\eta$ | Tg |
|---|---|---|---|---|
| 37 | 90 | 10 | 108 | −51 |
| 38 | 80 | 20 | 122 | −44 |
| 39 | 70 | 30 | 148 | −37 |
| 40 | 60 | 40 | 164 | −29 |
| 41 | 50 | 50 | 212 | −21 |
| 42 | 40 | 60 | 276 | −12 |
| 43 | 30 | 70 | 344 | − 3 |
| 44 | 20 | 80 | 600 | + 7 |
| 45 | 10 | 90 | 1100 | +18 |

EXEMPLES 46 et 47

On reproduit la procédure expérimentale des Exemples 2 et 3 en remplaçant le méthacrylate de 3,3,5-tri-méthylhexyle par l'acrylate correspondant et l'acrylate de n-butyle par le méthacrylate de méthyle. Le copolymère en solution obtenu présente une viscosité à 20°C, mesurée comme aux exemples précédents, égale respectivement à 116 mPa.s (exemple 46 : X = 90 et Y = 10) et à 180 mPa.s (exemple 47 : X = 80 et Y = 20).

**Revendications**

1 - (Co)polymères à base de (méth)acrylate d'alkyle en solution dans un hydrocarbure aliphatique saturé, caractérisés en ce que pour 100 parties en poids de (méth)acrylate d'alkyle, ils comprennent :
– de 10 à 100 parties en poids environ d'au moins un acrylate ou méthacrylate d'alkyle primaire supérieur dont le groupe alkyle primaire supérieur possède au moins 8 atomes de carbone, et
– de 0 à 90 parties en poids environ d'au moins un comonomère choisi parmi les acrylates et méthacrylates d'alkyle primaire inférieur dont le groupe alkyle primaire inférieur possède de 1 à 6 atomes de carbone et les acrylates et méthacrylates de dialkylaminoalkyle dont les groupements alkyle possèdent de 1 à 6 atomes de carbone environ,
et en ce que ledit hydrocarbure aliphatique saturé possède au moins 6 atomes de carbone.

2 - (Co)polymères en solution selon la revendication 1, caractérisés en ce que le groupe alkyle primaire supérieur est choisi parmi les groupes 2-éthylhexyle et 3,5,5-triméthylhexyle.

3 - (Co)polymères en solution selon l'une des revendications 1 et 2, caractérisés en ce que le taux de matières sèches de la solution atteint jusqu'à 70% en poids.

4 - (Co)polymères en solution selon l'une des revendications 1 à 3, caractérisés en ce que la viscosité de la solution à température ambiante est comprise entre 60 et 3000 mPa.s.

5 - Procédé de préparation d'un (co)polymère en solution selon l'une des revendications 1 à 4, comprenant la (co)polymérisation, dans un hydrocarbure aliphatique saturé possédant au moins 6 atomes de carbone, à une température comprise entre 70°C et la température d'ébullition dudit hydrocarbure et en présence d'au moins un initiateur de radicaux libres, d'un système de monomère(s) à base de (méth)acrylate d'alkyle comprenant, pour 100 parties en poids de (méth)acrylate d'alkyle :
– de 10 à 100 parties en poids d'environ d'au moins un acrylate ou méthacrylate d'alkyle primaire supérieur dont le groupe alkyle primaire supérieur possède au moins 8 atomes de carbone, et

– de 0 à 90 parties en poids environ d'au moins un comonomère choisi parmi les acrylates et méthacrylates d'alkyle primaire inférieur dont le groupe alkyle primaire inférieur possède de 1 à 6 atomes de carbone et les acrylates et méthacrylates de dialkylamino-alkyle dont les groupements alkyle possèdent de 1 à 6 atomes de carbone.

6 - Composition de revêtement comprenant au moins un (co)polymère en solution selon l'une des revendications 1 à 4.

7 - Composition de revêtement selon la revendication 6 utilisée comme liant dans des formulations de peintures et encres en solvants, seule ou en combinaison avec au moins une résine choisie parmi les résines de type alkyde, caoutchouc chloré, époxy ou polyuréthanne.

8 - Composition de revêtement selon la revendication 6 utilisée comme adhésif sensible à la pression soit seule lorsque sa viscosité à température ambiante est au moins égale à 2000 mPa.s, soit en combinaison avec une solution d'élastomère.

9 - Composition de revêtement selon la revendication 6 utilisée pour la formulation de colles en solvants, caractérisée en ce qu'elle comprend en outre une solution alcoolique d'une résine choisie parmi la colophane, les sous-produits de distillation de la colophane, les résines de tall et les esters de colophane ou de tall avec un polyalcool.

10 - Composition de revêtement selon la revendication 6 utilisée pour la formulation d'adhésifs de contact, caractérisée en ce qu'elle comprend en outre une solution d'élastomère, une charge minérale et, le cas échéant, une résine tackifiante de type polyterpène-phénolique

**Revendications pour l'Etat contractant suivant : ES**

1 - Procédé de préparation d'un (co)polymère à base de (méth)acrylate d'alkyle en solution, caractérisé par le fait qu'on (co)polymérise, dans un hydrocarbure aliphatique saturé possédant au moins 6 atomes de carbone, à une température comprise entre 70°C et la température d'ébullition dudit hydrocarbure et en présence d'au moins un initiateur de radicaux libres, un système de monomère(s) à base de (méth) acrylate d'alkyle comprenant, pour 100 parties en poids de (méth)acrylate d'alkyle :
    – de 10 à 100 parties en poids d'environ d'au moins un acrylate ou méthacrylate d'alkyle primaire supérieur dont le groupe alkyle primaire supérieur possède au moins 8 atomes de carbone, et
    – de 0 à 90 parties en poids environ d'au moins un comonomère choisi parmi les acrylates et méthacrylates d'alkyle primaire inférieur dont le groupe alkyle primaire inférieur possède de 1 à 6 atomes de carbone et les acrylates et méthacrylates de dialkylamino-alkyle dont les groupements alkyle possèdent de 1 à 6 atomes de carbone.

2 - Procédé selon la revendication 1, caractérisé par le fait qu'on choisit le groupe alkyle primaire supérieur parmi les groupes 2-éthylhexyle et 3,5,5-triméthylhexyle.

3 - Procédé selon l'une des revendications 1 et 2, caractérisés par le fait que le taux de matières sèches de la solution atteint jusqu'à 70% en poids.

4 - Procédé selon l'une des revendications 1 à 3, caractérisés par le fait que la viscosité de la solution à température ambiante est comprise entre 80 et 3000 mPa.s.

5 - Procédé de préparation d'une composition de revêtement, caractérisé par le fait qu'on prépare au moins un (co)polymère en solution par le procédé tel que défini à l'une des revendications 1 à 4, ladite composition pouvant être utilisée telle quelle ou en mélange avec d'autres ingrédients usuels, choisis en fonction de l'application envisagée.

6 - Procédé selon la revendication 5, dans lequel la composition de revêtement est destinée à être utilisée comme liant dans des formulations de peintures et encres en solvants, seule ou après avoir été combinée avec au moins une résine choisie parmi les résines de type alkyde, caoutchouc chloré, époxy ou polyuréthanne, et, le cas échéant, avec au moins l'un parmi les épaississants, les fongicides ou biocides, les pigments organiques ou minéraux, et les charges.

7 - Procédé selon la revendication 5, dans lequel la composition de revêtement est destinée à être utilisée comme adhésif sensible à la pression soit seule lorsque sa viscosité à température ambiante est au moins égale à 2000 mPa.s, soit après avoir été combinée avec une solution d'élastomère, en une quantité telle que le rapport en masse élastomère/(co)polymère (méth)acrylique ne dépasse pas 2/1 et soit communément compris entre 1/2 et 2/1.

8 - Procédé selon la revendication 5, dans lequel la composition de revêtement est destinée à être utilisée pour la formulation de colles en solvants, ladite composition étant en outre combinée avec une solution alcoolique d'une résine choisie parmi la colophane, les sous-produits de distillation de la colophane, les résines de tall et les esters de colophane ou de tall avec un polyalcool, le rapport en masse résine/(co)polymère (méth)acrylique étant généralement compris entre 3/1 et 5/1, la concentration de résine et (co)polymère dans la solution étant géneralement de 60 à 75% environ en masse, au moins une charge, dans un rapport en poids charge(s)/(résine + (co)polymère) allant généralement jusqu'à 2/1 environ, un plastifiant et/ou une résine liquide d'hydrocarbure en $C_5$ ou $C_9$ pouvant être ajouté à la composition.

**9 -** Procédé selon la revendication 5, dans lequel la composition de revêtement est destinée à être utilisée pour la formulation d'adhésifs de contact, ladite composition étant en outre combinée avec une solution d'élastomère dans un rapport en masse élastomère/(co)polymère de l'ordre de 1/1 environ, au moins une charge minérale dans un rapport en masse charge(s)/élastomère + (co)polymère allant généralement jusqu'à 1/1 environ, et, le cas échéant, au moins une résine tackifiante de type polyterpène-phénolique.

Office européen
des brevets

**RAPPORT DE RECHERCHE EUROPEENNE**

Numero de la demande

EP  91 40 0929

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | GB-A-1 388 381 (ICI LTD) --- | 1 | C 08 F 220/18 C 09 D 133/04 |
| A | DE-A-3 114 090 (BASF AG) --- | 1 | |
| A | DE-A-2 060 545 (RÖHM GmbH) ----- | 1 | |

**DOMAINES TECHNIQUES RECHERCHES (Int. Cl.5)**

C 08 F

Le présent rapport a été établi pour toutes les revendications

| Lieu de la recherche | Date d'achèvement de la recherche | Examinateur |
|---|---|---|
| LA HAYE | 21-05-1991 | GLIKMAN J-F.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)